# EUROPEAN PATENT APPLICATION

(11) **EP 3 395 758 A1**
(43) Date of publication of application: **31.10.2018**
(21) Application number: 16879282.8
(22) Date of filing: 19.12.2016
(51) Int. Cl.: C01B 3/34, C01B 32/50

(54) **METHOD FOR DECOMPOSING AND RECYCLING CARBON DIOXIDE USING HOT STOVE**

(30) Priority: 23.12.2015 KR 20150184786
(71) Applicant: Posco, Pohang-si, Gyeongsangbuk-do 37859 (KR)
(72) Inventor: KUEON, Yeong-Seob, Pohang-si Gyeongsangbuk-do 37877 (KR)
(74) Representative: Zech, Stefan Markus
(86) International application number: PCT/KR2016/014902
(87) International publication number: WO 2017/111415

(57) **Abstract**

The present invention relates to a technique for separating carbon dioxide from waste gas discharged from a blast furnace, sending the carbon dioxide to a regenerative chamber of a hot stove, and decomposing same by using heat energy stored in the hot stove regenerative chamber and heat of combustion of methane gas supplied from outside. Or, the present invention relates to a technique by which, when carbon dioxide and methane gas are sent to a hot stove regenerative chamber by the present invention, the carbon dioxide and the methane gas are decomposed into carbon monoxide and hydrogen gas by means of stored heat and heat of combustion, and when the decomposed carbon monoxide and hydrogen gas are re-sent to a blast furnace, same take on the role of a reducing gas for reducing iron ore.

## Description

### [Technical Field]

The present disclosure relates to a technology for decomposing and recycling a large amount of carbon dioxide generated during the production of molten steel from iron ore.

Specifically, the present disclosure relates to a technology for separating carbon dioxide from waste gas discharged from a blast furnace, sending the separated carbon dioxide to a heat accumulator (or a regenerative chamber) of a hot stove together with methane gas, decomposing the same into carbon monoxide and hydrogen using accumulated heat (or stored heat) and heating energy, and subsequently recycling the carbon monoxide and hydrogen as reducing gases for reducing iron ore in the blast furnace.

### [Background Art]

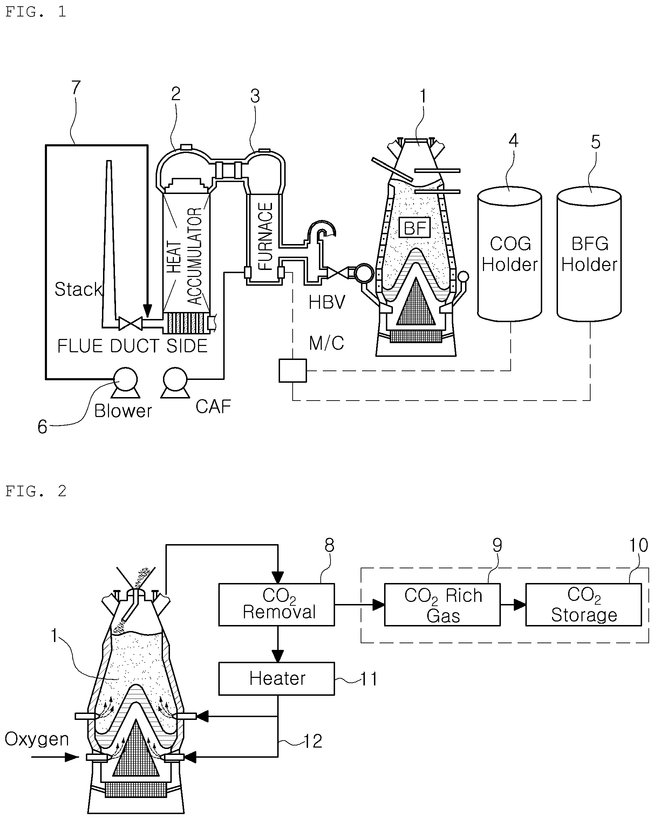

FIG. 1 illustrates a general structure for producing molten iron using a general blast furnace 1, in which heat is accumulated in a fire brick present inside a heat accumulator 2 using a heat source obtained by burning a blast furnace gas (BFG) and a coke oven gas (COG), which are by-product gases produced in a steel process in which methane gas is a main ingredient, in a hot stove combustion chamber 3. When heat accumulation is completed, air is sent to a heat accumulator through a blower 6, increased in temperature to about 1,250°C, and blown to the blast furnace 1, so as to be used as a heat source of the blast furnace.

Generally, as for carbon dioxide emitted from a blast furnace, about 2.0 tons of carbon dioxide is generated when 1.0 ton of molten iron is produced, and about 80% of carbon dioxide produced during a steel process is generated during an iron making process. Since carbon dioxide causes global warming, steelmakers around the world use many different methods to solve the carbon dioxide emission problem.

As a typical technique thereof, FIG. 2 illustrates a heat efficiency enhancement technique to solve the carbon dioxide emission problem that arises in the steel process in the European Union (EU), in which carbon dioxide 9, separated through a carbon dioxide separating device 8, is transported to be stored in an abandoned mine or the deep sea 10 and carbon monoxide and waste heat are again blown from the carbon dioxide 8 to the blast furnace 12 (EU supported technique).

This technique, however, has a problem in that transporting and burying carbon dioxide are costly and high-priced steel required for transporting highly corrosive carbon dioxide must be used.

Recently, many different methods have been introduced to solve the problem. U.S. Patent Laid-Open Publication No. 2014-0130639 discloses that carbon dioxide is decomposed using renewable energy such as sunlight and wind power to recycle the same, and U.S. Patent Laid-Open Publication No. 2014-0047818, Chinese Patent Laid-Open Publication No. 103380216, European Patent Laid-Open Publication No. 2350324, U.S. Patent Laid-Open Publication No. 2012-0214116, and European Patent Laid-Open Publication No. 0032523 disclose techniques for improving thermal efficiency by mainly recycling waste heat or recycling waste gas in a hot stove.

The above-mentioned methods, however, do not relate to a technique for decomposing carbon dioxide using heat accumulated in a heat accumulator of a hot stove and heating energy of methane gas, and thus, cannot solve the problem of carbon dioxide as a major contributor of global warming.

### [Disclosure]

### [Technical Problem]

An aspect of the present disclosure is to provide a technique of sending carbon dioxide separated from waste gas discharged from a blast furnace to a heat accumulator of a hot stove and decomposing carbon dioxide using heat energy stored in the heat accumulator of the hot stove and combustion heat of methane gas supplied from the outside.

An aspect of the present disclosure is to provide a technique in which when carbon dioxide and methane gas are sent to a heat accumulator of a hot stove, the carbon dioxide and the methane gas are decomposed into carbon monoxide and a hydrogen gas due to accumulated heat and combustion heat, and the decomposed carbon monoxide and hydrogen gas are returned to a blast furnace and serve as reducing gases for reducing iron ore.

The present disclosure proposes a technique of preheating carbon dioxide and methane gas using waste gas generated when heat is accumulated in a hot stove and a blast furnace to increase decomposition efficiency and adding steam or oxygen largely generated during a steel process in addition to the methane gas as well, rather than simply sending separated carbon dioxide and methane gas to a heat accumulator of a hot stove and decomposing carbon dioxide using accumulated heat and combustion heat and recycling the same.

### [Technical Solution]

The present disclosure relates to a technique of sending carbon dioxide separated from waste gas discharged from a blast furnace to a heat accumulator of a hot stove and decomposing carbon dioxide using heat energy stored in the heat accumulator of the hot stove and combustion heat of methane gas supplied from the outside.

In general, heat is accumulated in the heat accumulator using heat generated by burning a combustion gas in a combustion chamber, and when heat accumulation is completed, air is blown in the opposite direction and increased in temperature to about 1,250°C to be used as a heat source of a blast furnace. Here, the aspect of the present disclosure is achieved by sending carbon dioxide and methane gas, instead of blown air, after completion of heat accumulation to the heat accumulator of the hot stove.

After completion of heat accumulation in the heat accumulator, flow rates of carbon dioxide and the methane gas may be 30% to 70% and 70% to 30%, respectively, best reaction efficiency is obtained when flow rates of carbon dioxide and the methane gas are 50% and 50%, respectively. In order to accelerate the reaction, a detention time is maintained at the same level as that when air is blown in the related art.

Further, the present disclosure relates to a technique in which when carbon dioxide and methane gas are sent to the heat accumulator of the hot stove, the carbon dioxide and the methane gas are decomposed into carbon monoxide and a hydrogen gas due to accumulated heat and combustion heat, and the decomposed carbon monoxide and hydrogen gas are returned to a blast furnace and recycled as reducing gases for reducing iron ore.

Therefore, according to the present disclosure, ultimately, carbon dioxide generated in a blast furnace is decomposed into carbon monoxide (CO) and hydrogen (H₂) using a large amount of accumulated heat energy stored in the heat accumulator of the hot stove and combustion heat of the methane gas and carbon monoxide (CO) and hydrogen (H₂) are blown back to the blast furnace, and here, since carbon monoxide (CO) and hydrogen (H₂) blown to the blast furnace serve as reducing gases which meet oxygen of iron ore (Fe₂O₃, Fe₃O₄) to produce iron (Fe), and therefore, the present disclosure advantageously obtains two effects of decomposing carbon dioxide and producing the reducing gases required in the blast furnace.

### [Advantageous Effects]

As set forth above, according to an exemplary embodiment in the present disclosure, since carbon dioxide discharged in large amount from the blast furnace and blamed for global warming is decomposed, the problem of carbon dioxide is reduced, and the decomposed carbon monoxide and hydrogen may serve both as a heat source in the blast furnace and as reducing gases reducing iron ore.

In addition, the present disclosure is economically advantageous in that carbon dioxide can be decomposed using the existing facilities of a molten iron process and existing heat sources.

### [Description of Drawings]

FIG. 1 illustrates a general structure for producing molten iron using a general blast furnace 1.
FIG. 2 illustrates a structure using the carbon dioxide separating device 8 to solve the carbon dioxide problem arising in the steel process in the European Union.

FIG. 3 illustrates a structure using the heat accumulator 2 of a hot stove according to the present disclosure.

### [Description of Reference Numerals]

- 1:: BLAST FURNACE
- 2:: HEAT ACCUMULATOR OF HOT STOVE
- 3:: FURNACE OF HOT STOVE
- 4:: COG HOLDER
- 5:: BFG HOLDER
- 6:: BLOWER
- 7:: BLOWING PIPE
- 8:: CARBON DIOXIDE SEPARATING COLLECTOR
- 9:: CARBON DIOXIDE-RICH GAS
- 10:: CARBON DIOXIDE REPOSITORY
- 11:: HEATER
- 12:: PIPE
- 13:: CARBON DIOXIDE SUPPLY DEVICE
- 14:: METHANE-CONTAINING GAS OR OXYGEN SUPPLY DEVICE

### [Best Mode for invention]

According to an exemplary embodiment of the present disclosure, when heat accumulation is completed in a heat accumulator 2 of a hot stove, carbon dioxide and methane gas separated in a carbon dioxide separating device 8 are blown to the heat accumulator 2 of the hot stove through a blower 6, and carbon dioxide is decomposed in the heat accumulator 2 to produce a reducing gas required for a blast furnace.

### [Mode for invention]

Hereinafter, exemplary embodiments of the present disclosure will be described with reference to the accompanying drawings. However, the exemplary embodiments of the present disclosure may be modified into various other forms and the scope of the present disclosure is not limited to the exemplary embodiments described below.

Further, in describing exemplary embodiments of the present disclosure, the same titles and the same reference numerals are used for the same components, and redundant descriptions will be omitted below. In the drawings referred to below, a scale ratio is not applied.

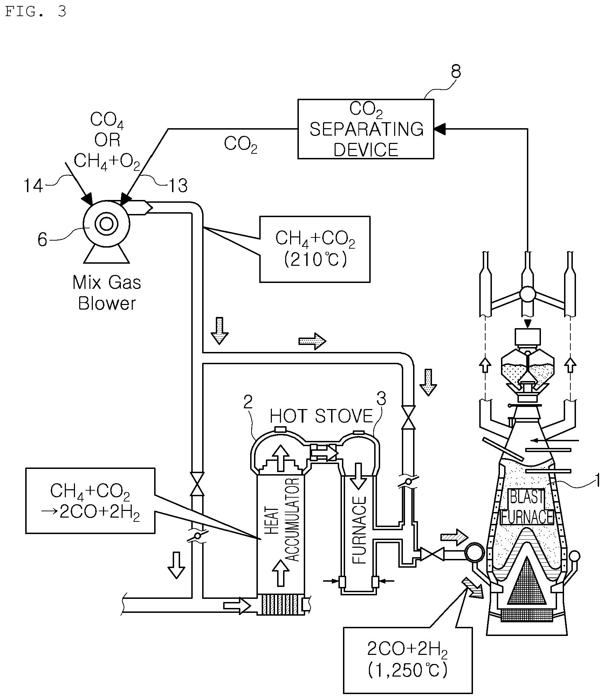

FIG. 3 is a view for explaining the technique according to the present disclosure. When heat accumulation in the heat accumulator 2 of the hot stove is completed, carbon dioxide and methane gas, or carbon dioxide, methane gas, and steam, or carbon dioxide, methane gas, and oxygen separated in the carbon dioxide separating device 8 are blown to the heat accumulator 2 of the hot stove through the blower 6.

For the sake of simplicity, carbon dioxide and the methane gas will be described. A reaction scheme in which carbon dioxide and the methane gas react in the heat accumulator 2 of the hot stove is as follows.
CH₄ + CO₂ → 2CO + 2H₂
CO₂ → CO + 0.5 O₂ -2.9 eV/mol

Here, an endothermic reaction requiring heat from the outside in order for carbon dioxide (CO₂) to be decomposed into carbon monoxide (CO) and 0.5 O₂ is shown. If only CO₂ is supplied and CO₂ is decomposed using only a heat source stored in the heat accumulator of the hot stove to satisfy the amount of gas required for the blast furnace, decomposition efficiency is merely about 10.8%. Carbon dioxide cannot be sufficiently decomposed with only heat stored in the heat accumulator and a temperature cannot even be increased to 1,250°C required for the blast furnace.

Therefore, it can be seen that, when methane gas is mixed with carbon dioxide and sent to the heat accumulator of the hot stove to produce additional heat source to the heat accumulated in the heat accumulator of the hot stove, efficiency of about 86.2% is obtained and the temperature of the decomposed carbon monoxide and hydrogen is increased to 1,250°C required for the blast furnace.

Table 1 below shows the summary of the contents described above according to the present disclosure, and it can be seen that proposal 1 is most efficient.

**[Table 1]**

| | Influent gas | Effluent gas | Amount of gas after reaction | Required heat (Kcal) | Available heat (Kcal) | Reaction rate (%) |
|---|---|---|---|---|---|---|
| **Air** | **Air** | **Air** | **none** | **174,813** | **174,813** | **0** |
| CO₂ | CO₂ | CO+0.5 O₂ | 50%↑ | 1,623,37 0 | 174,813 | 10.8 |
| Proposal 1 | CH₄+CO₂ | 2CO+2H₂ | 100%↑ | 207,319 | 174,813 | 86.20 |
| Proposal 2 | 3CH₄+CO₂+2O₂ | 4CO+4H₂+2H₂ O | 67%↑ | 580,297 | 419,673 | 64.59 |

Although not mentioned in the above table, oxygen or steam or oxygen and steam may be mixed with carbon dioxide and the methane gas.

In order to improve efficiency, carbon dioxide and the methane gas may be preheated using waste heat discharged from the blast furnace 1 and waste heat generated at the time of burning in the hot stove. As for a configuration of a preheater, it is economical that heating is performed by passing through a heat exchanger with waste heat generated at the time of heat accumulation in the hot stove, and thereafter, carbon dioxide and the methane gas pass through the preheater so as to be preheated.

Meanwhile, in order to decompose carbon dioxide in the heat accumulator of the hot stove, combustion heat may be used together, while using accumulated heat. Further, in another exemplary embodiment, a blowing gas of methane and carbon dioxide may be introduced to a furnace (or combustion chamber) of the hot stove to decompose carbon dioxide.

The exemplary embodiments of the present disclosure have been described in detail, but the scope of the present disclosure is not limited thereto and various variants and modifications may be made by a person skilled in the art without departing from the technical concept of the present disclosure defined in claims.

### [Industrial Applicability]

According to the exemplary embodiment of the present disclosure, the carbon dioxide problem may be reduced by decomposing carbon dioxide, a major contributor to global warming, discharged in large amounts from a blast furnace, and the decomposed carbon monoxide and hydrogen may also serve as reducing gases reducing iron ore in the blast furnace. Therefore, the present disclosure may be high in utilization to solve the carbon dioxide problem in a steel process, in particular, an iron-making process.

## Claims

1. An apparatus for recycling carbon dioxide discharged from a blast furnace, the apparatus comprising:
a carbon dioxide separating device separating a gas discharged from the blast furnace;
a mixing blower mixing carbon dioxide and methane gas and blowing the mixture gas; and
a hot stove receiving the mixture gas blown from the mixing blower and supplying a high-temperature gas to the blast furnace, while producing carbon monoxide and hydrogen.

2. The apparatus of claim 1, wherein the hot stove includes a heat accumulator and a furnace, and carbon dioxide is decomposed in the heat accumulator, in the furnace, or in the heat accumulator and the furnace.

3. The apparatus of claim 1, wherein one or more of steam and oxygen are additionally mixed in the mixing blower.

4. The apparatus of claim 1, further comprising a preheater preheating carbon dioxide and the methane gas using waste heat discharged from the blast furnace, waste heat generated at the time of burning in the hot stove, or a combination thereof.

5. The apparatus of claim 1, wherein flow rates of carbon dioxide and the methane gas blown to the hot stove are 30% to 70% and 70% to 30%, respectively.

6. A method for recycling carbon dioxide discharged from a blast furnace, the method comprising:
separating carbon dioxide from a gas discharged from a blast furnace;
mixing carbon dioxide and methane gas and blowing the mixture gas to a hot stove;
blowing the mixture gas, which is blown from the mixing blower, to the hot stove to produce carbon monoxide and hydrogen; and
supplying the produced carbon monoxide and hydrogen to the blast furnace.

7. The method of claim 6, wherein the hot stove includes a heat accumulator and a furnace, and carbon dioxide is decomposed in the heat accumulator, in the furnace, or in the heat accumulator and the furnace.

8. The method of claim 6, wherein one or more of steam and oxygen are additionally mixed in the mixing blower.

9. The method of claim 6, further comprising preheating carbon dioxide and the methane gas using waste heat discharged from the blast furnace, waste heat generated at the time of burning in the hot stove, or a combination thereof.

10. The method of claim 6, wherein flow rates of carbon dioxide and the methane gas blown to the hot stove are 30% to 70% and 70% to 30%, respectively.
